# FASCICULE DE BREVET EUROPEEN

(11) **EP 1 353 253 B1**
(45) Date de publication et mention de la délivrance du brevet: **31.08.2005**
(21) Numéro de dépôt: 03290076.3
(22) Date de dépôt: 13.01.2003
(51) Int. Cl.: G05D 1/08

(54) **Aéronef à commandes de vol électriques, pourvu d'un fuselage susceptible de se déformer et de vibrer**
Fly-by-wire gesteuertes Flugzeug mit einem flexiblen, schwingungsfähigen Rumpf
Fly-by wire-controlled aircraft with a flexible and vibratable body

(30) Priorité: 08.04.2002 FR 0204334
(43) Date de publication de la demande: 15.10.2003
(73) Titulaire: AIRBUS France, 31060 Toulouse (FR)
(72) Inventeur: Kubica, Francois, 31100 Toulouse (FR)
(74) Mandataire: Bonnetat, Christian

(56) Documents cités:
- EP-A- 0 296 951
- US-A- 3 079 108
- US-A- 3 241 077
- US-A- 3 279 725

## Description

La présente invention concerne les aéronefs à commandes de vol électriques comportant un fuselage susceptible de se déformer et de vibrer longitudinalement et latéralement, avec formation de ventres et de noeuds de vibration répartis le long de l'axe longitudinal dudit aéronef. Elle concerne tout particulièrement les avions de grande longueur, présentant une flexibilité longitudinale élevée. Toutefois, elle s'applique également avantageusement à des avions de moindre longueur et moins flexibles.

On sait qu'un aéronef à commandes de vol électriques comporte des organes de pilotage, tels que manches, minimanches, palonniers, etc ... équipés de transducteurs électriques, de sorte qu'ils engendrent des consignes électriques de pilotage représentatives de l'action qu'un pilote exerce sur eux, voir par exemple la demande de brevet européen EP-A-0 296 951. Il comporte également un calculateur de commandes de vol qui élabore, à partir desdites consignes électriques de pilotage engendrées par lesdits organes de pilotage et de paramètres de pilotage provenant par exemple de capteurs, des ordres de commande électriques que ledit calculateur de commandes de vol applique à des actionneurs chargés du déplacement des gouvernes de l'aéronef.

On sait de plus que les aéronefs à commandes de vol électriques sont pourvus d'un système de référence inertielle (généralement appelé système IRS) comprenant des éléments utiles à la navigation, tels que la centrale inertielle, et des éléments utiles au pilotage, tels que des gyromètres et des accéléromètres. On sait enfin que tous ces éléments, qu'ils concernent la navigation ou le pilotage, sont regroupés en une unité IRS disposée en un emplacement déterminé dudit aéronef. Bien entendu, de ce fait, cette unité IRS est soumise à l'action des déformations du fuselage, qui se produisent principalement suivant les axes de tangage et de lacet sous l'action de braquage des gouvernes ou de perturbations extérieures.

A cause de la constante de temps élevée attachée aux éléments utiles à la navigation, de telles déformations n'ont que peu d'action sur ces derniers. En revanche, pour s'affranchir des problèmes d'interaction entre les déformations du fuselage et les éléments utiles au pilotage, il est indispensable de disposer des moyens de filtrage sur les chaînes de commandes de gouvernes.

Cependant, pour des aéronefs présentant une souplesse longitudinale importante, les déformations deviennent plus fortes, de sorte qu'il est alors nécessaire de filtrer de façon très intense lesdites chaînes de commande, ce qui introduit des déphasages importants dans celles-ci et nuit donc fortement aux performances desdites chaînes de commande.

La présente invention a pour objet de remédier à cet inconvénient.

A cette fin, selon l'invention, l'aéronef à commandes de vol électriques, pourvu de gouvernes aptes à être déplacées par des actionneurs commandés électriquement, ledit aéronef comportant :
- des organes de pilotage et au moins un calculateur de commandes de vol, lesdits organes de pilotage étant actionnés par un pilote et engendrant des consignes électriques de pilotage, qui sont adressées audit calculateur de commandes de vol, ce dernier calculateur engendrant, à partir desdites consignes électriques de pilotage et de paramètres de pilotage, des ordres de commande en roulis, en tangage et en lacet, qui sont adressés auxdits actionneurs pour le déplacement desdites gouvernes ;
- un système de référence inertielle comprenant des éléments utiles à la navigation et des éléments utiles au pilotage, ces derniers éléments étant soit du type gyromètre, soit du type accéléromètre ; et
- un fuselage susceptible de se déformer et de vibrer avec formation de ventres et de noeuds de vibration répartis le long de l'axe longitudinal dudit aéronef,
est remarquable en ce que :
- ledit système de référence inertielle présente une structure éclatée, avec lesdits éléments utiles au pilotage séparés desdits éléments utiles à la navigation ;
- lesdits éléments utiles au pilotage sont répartis le long dudit fuselage ;
- chaque élément utile au pilotage, de type gyromètre, est disposé à un noeud de vibration dudit fuselage ;
- chaque élément utile au pilotage, de type accéléromètre, est disposé à un ventre de vibration dudit fuselage ; et
- lesdits éléments utiles au pilotage sont reliés audit calculateur de commandes de vol, afin que les signaux de mesure qu'ils délivrent soient utilisés comme paramètres de pilotage.

Ainsi, lesdits accéléromètres permettent de mesurer les accélérations de l'aéronef en y incluant les mouvements vibratoires du fuselage, tandis que les gyromètres permettent de mesurer les vitesses de rotation, sans y incorporer les modes structuraux du fuselage. Ces mesures accélérométriques et gyrométriques sont adressées au calculateur de commandes de vol, qui élabore en conséquence les ordres de commande des gouvernes.

Les lois de pilotage, incorporées dans ce calculateur, n'ont donc pas besoin de filtrer les mouvements vibratoires du fuselage. En effet, les modes structuraux mesurés par les accéléromètres peuvent être activement contrôlés par les lois de pilotage, tandis que les gyromètres ne mesurent pas les déformées du fuselage.

Dans le cas le plus fréquent, le fuselage de l'aéronef se déforme et vibre de façon à comporter un ventre de vibration à chacune de ses extrémités et un noeud de vibration au voisinage de son centre de gravité. Dans ce cas, ledit aéronef comporte :
- au moins un accéléromètre avant disposé à la partie avant dudit fuselage et délivrant une mesure d'accélération verticale et une mesure d'accélération latérale ;
- au moins un accéléromètre arrière disposé à la partie arrière dudit fuselage et délivrant une mesure d'accélération verticale et une mesure d'accélération latérale ; et
- au moins un gyromètre disposé au voisinage dudit centre de gravité dudit aéronef et délivrant des mesures de la vitesse de roulis, de la vitesse de tangage et de la vitesse de lacet.

Il est alors avantageux que :
- lesdites mesures d'accélération verticale, respectivement engendrées par ledit accéléromètre avant et par ledit accéléromètre arrière, et la mesure de la vitesse de tangage, engendrée par ledit gyromètre, soient utilisées comme paramètres de pilotage pour l'élaboration desdits ordres de commande en tangage ;
- lesdites mesures d'accélération latérale, respectivement engendrées par ledit accéléromètre avant et par ledit accéléromètre arrière, et lesdites mesures de la vitesse de roulis et de la vitesse de lacet, engendrées par ledit gyromètre, soient utilisées comme paramètres de pilotage pour l'élaboration desdits ordres de commande en roulis ; et
- lesdites mesures d'accélération latérale, respectivement engendrées par ledit accéléromètre avant et par ledit accéléromètre arrière, et lesdites mesures de la vitesse de roulis et de la vitesse de lacet, engendrées par le gyromètre, soient utilisées comme paramètres de pilotage pour l'élaboration desdits ordres de commande en lacet.

L'aéronef peut alors comporter :
- des moyens de filtrage desdites mesures d'accélération et de la ou des mesures de vitesse, pour en éliminer les bruits de mesure et éviter le repliement de spectre ;
- des multiplicateurs de gain pour pondérer chacune desdites mesures d'accélération ou de vitesse filtrées ;
- des moyens de contrôle de phase pour lesdites mesures d'accélération filtrées et pondérées ; et
- des moyens d'addition pour additionner lesdites mesures d'accélération filtrées, pondérées et contrôlées en phase, ladite ou lesdites mesure(s) de vitesse filtrée(s) et pondérée(s) et la consigne électrique de pilotage correspondante, afin d'élaborer l'ordre de commande correspondant.

L'aéronef peut comporter de plus, pour l'élaboration des ordres de commande en roulis et en lacet, des moyens d'intégration de la vitesse de roulis, afin de créer une information d'angle de roulis, qui est adressée auxdits moyens d'addition après pondération par un multiplicateur de gain.

Bien entendu, dans une telle architecture, tous les gains sont optimisés de manière à satisfaire les compromis entre les performances et la stabilité. On constate, de plus, que l'architecture conforme à la présente invention permet la suppression de filtres basse fréquence, bien que l'aéronef puisse être très flexible.

Les figures du dessin annexé feront bien comprendre comment l'invention peut être réalisée. Sur ces figures, des références identiques désignent des éléments semblables.

La figure 1 illustre, de façon schématique et générale, le système de commandes de vol électriques conforme à la présente invention, pour un exemple d'avion présentant une flexibilité longitudinale élevée.

La figure 2 montre, en perspective schématique, un avion de transport civil, avec les emplacements de ses accéléromètres et gyromètres.

La figure 3 est le schéma synoptique du système de commande en tangage de l'avion de la figure 2.

La figure 4 est le schéma synoptique des systèmes de commande en roulis et en lacet de l'avion de la figure 2.

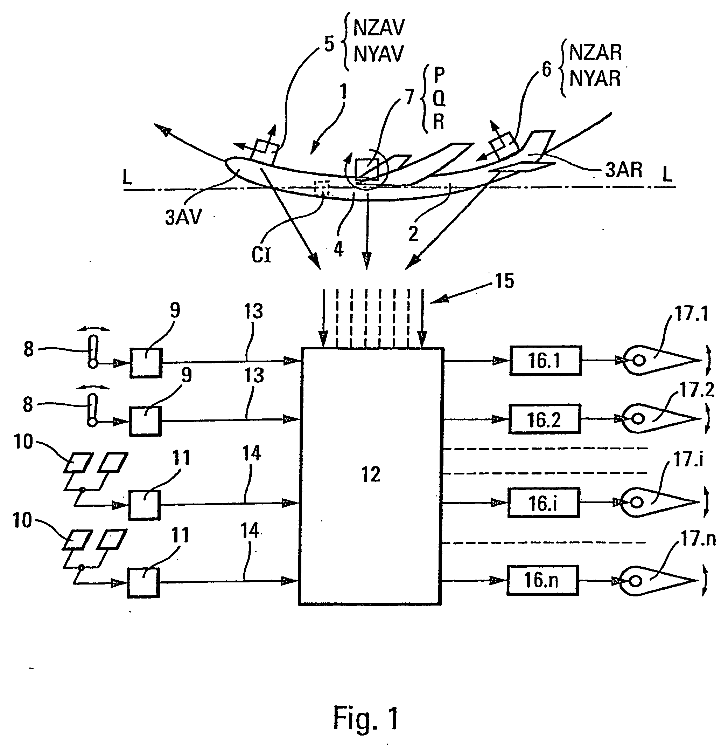

L'avion 1 à flexibilité élevée le long de son axe longitudinal L-L, montré par la figure 1, peut se déformer sous l'effet du braquage de ses gouvernes ou de perturbations extérieures, de sorte que les déformées principales de son fuselage 2, suivant les axes de lacet et de tangage, sont très importantes aux extrémités avant 3AV et arrière 3AR dudit fuselage 2, alors que le centre 4 de ce dernier (où se trouve le centre de gravité de l'avion 1) se déforme peu. De plus, les vitesses de rotation liées aux déformées du fuselage 2 sont très faibles près du centre 4 dudit fuselage.

Comme cela est illustré schématiquement sur la figure 1, ledit avion 1 comporte :
- une centrale inertielle CI, destinée à la navigation et disposée à tout endroit usuel et approprié dudit fuselage 2 ;
- au moins un accéléromètre avant 5 disposé à l'extrémité avant 3AV ;
- au moins un accéléromètre arrière 6 disposé à l'extrémité arrière 3AR ; et
- au moins un gyromètre 7 disposé près du centre 4 dudit avion 1.

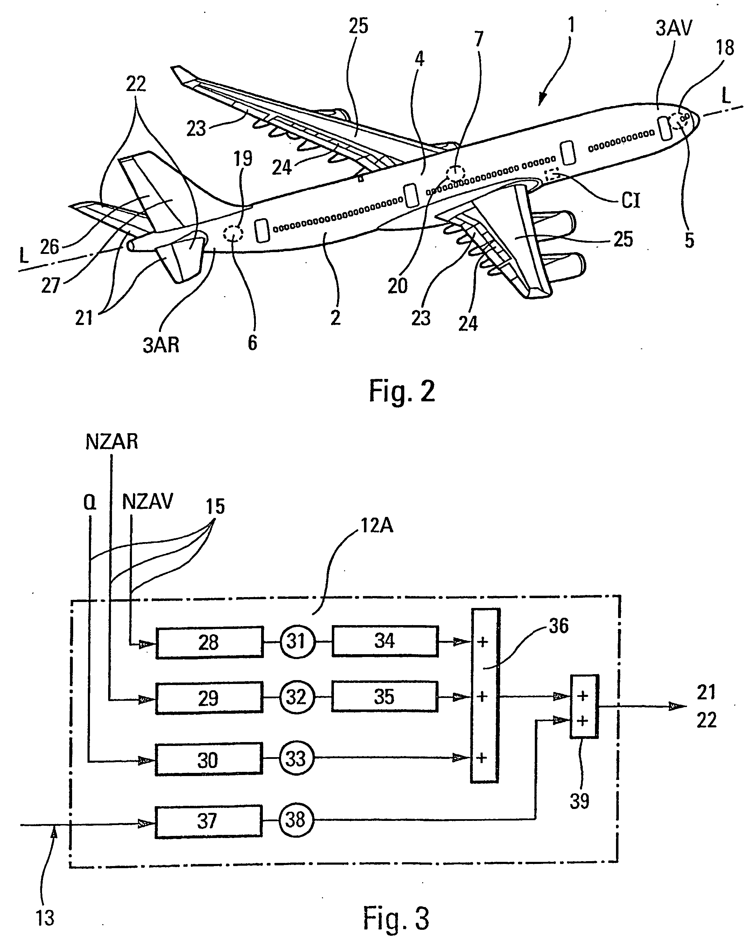

Bien entendu, bien que sur la figure 1, les accéléromètres 5, 6 et le gyromètre 7 soient représentés à l'extérieur de l'avion 1 pour des raisons de clarté de dessin, ils sont en réalité logés à l'intérieur du fuselage 2, comme cela est schématisé sur la figure 2.

Les accéléromètres avant et arrière 5 et 6 permettent de mesurer les accélérations de l'avion 1 en incluant les mouvements vibratoires du fuselage 2, ces accélérations étant mesurées sous la forme de leurs composantes latérales (NYAV pour l'accéléromètre avant 5 et NYAR pour l'accéléromètre arrière 6) et verticales (NZAV pour l'accéléromètre avant 5 et NZAR pour l'accéléromètre arrière 6). Par ailleurs, le gyromètre 7 permet de mesurer les vitesses de rotation du fuselage 2, près du centre de gravité de l'avion 1, hors la contribution des modes structuraux de ce dernier. Ces vitesses de rotation sont décomposées en leurs trois composantes P (vitesse de roulis), Q (vitesse de tangage) et R (vitesse de lacet) près du centre de gravité de l'avion 1.

Par ailleurs ledit avion 1 comporte :
- au moins un manche 8, par exemple du type minimanche, destiné à être actionné par un pilote (non représenté) et associé à un transducteur 9 engendrant des consignes de pilotage en roulis et en tangage représentatives des déplacements dudit manche 8 ;
- au moins un palonnier 10 destiné à être actionné par ledit pilote et associé à un transducteur 11 engendrant des consignes de pilotage en lacet représentatives des déplacements dudit palonnier 10 ;
- au moins un calculateur de commandes de vol 12 qui reçoit, de façon usuelle :
   . par des liaisons 13, lesdites consignes de pilotage en roulis et en tangage engendrées par les organes de pilotage 8, 9 ;
   . par des liaisons 14, lesdites consignes de pilotage en lacet engendrées par les organes de pilotage 10, 11 ; et
   . par des liaisons 15, des paramètres de pilotage provenant de capteurs, d'autres calculateurs, etc ...

Certaines desdites liaisons 15 relient les accéléromètres 5 et 6 et le gyromètre 7 audit calculateur de commandes de vol 12, de sorte que les mesures NZAV, NZAR, NYAV, NYAR, P, Q et R font partie desdits paramètres de pilotage adressés audit calculateur 12 par les liaisons 15.

A partir desdites consignes de pilotage en roulis, en tangage et en lacet et desdits paramètres de pilotage, le calculateur de commandes de vol 12 engendre des ordres de commande, qui sont adressés à une pluralité d'actionneurs 16.1, 16.2, ..., 16.i, ..., 16.n dont chacun d'eux déplace en conséquence une gouverne 17.1, 17.2, ..., 17.i, ..., 17.n.

On voit qu'ainsi les modes de vibration structuraux, mesurés par les accéléromètres 5 et 6, peuvent être activement contrôlés par les lois de pilotage implantées dans le calculateur 12, tandis que le gyromètre 7 ne prend pas en compte les déformées du fuselage. Il n'y a donc pas lieu de filtrer, par l'intermédiaire de ces lois de pilotage, les mouvements vibratoires du fuselage 2.

Comme on peut le voir sur la figure 2, les accéléromètres 5 et 6 sont disposés respectivement à des emplacements 18 et 19 de l'extrémité avant 3AV et de l'extrémité arrière 3AR de l'avion 1. Par ailleurs, ce dernier comporte :
- une gouverne de profondeur 21, articulée au bord de fuite d'un plan horizontal réglable 22 ;
- des ailerons 23 et des spoilers 24, articulés au bord de fuite des ailes 25 ; et
- une gouverne de direction 26, articulée au bord de fuite de la dérive verticale 27.

Bien entendu, chacune de ces gouvernes 21 à 24 et 26 correspond à l'une des gouvernes 17.i (avec i = 1 à n) de la figure 1.

Sur la figure 3 est représentée schématiquement la partie 12A du calculateur de commandes de vol 12 correspondant à la commande en tangage conformément à la présente invention et destinée à la commande de la gouverne de profondeur 21 et du plan horizontal réglable 22. Cette commande s'effectue à partir des mesures d'accélération verticales avant et arrière NZAV et NZAR et de la mesure de la vitesse de tangage Q au voisinage du centre 4, qui lui sont transmises par les liaisons 15 correspondantes.

Dans cette partie 12A du calculateur de commandes de vol 12, chaque mesure NZAV, NZAR et Q est filtrée par des moyens de filtrage 28, 29 et 30, respectivement, et pondérée par un gain, par des multiplicateurs de gain 31, 32 et 33, respectivement. Un tel filtrage, qui a pour objet d'éviter les bruits et le repliement du spectre, concerne les fréquences élevées supérieures à 10 Hz. Il n'est donc pas pénalisant pour les performances des commandes en tangage. De plus, des contrôleurs de phase 34 et 35 recevant les mesures accélérométriques NZAV et NZAR pondérées permettent de contrôler activement les modes structuraux du fuselage 2. Un tel contrôle de phase correspond à un réglage de la loi de commande en tangage, ledit réglage étant calé sur la phase desdits modes structuraux, afin d'augmenter leur amortissement. Les signaux sortant des contrôleurs de phase 34 et 35 et du multiplicateur de gain 33 sont additionnés dans un additionneur 36, pour permettre d'obtenir à la sortie de ce dernier un ordre de commande en tangage fonction des trois mesures NZAV, NZAR et Q.

Par ailleurs, cette partie 12A du calculateur 12 comporte de plus un dispositif de traitement 37 et un multiplicateur de gain 38 pour la consigne de pilotage en tangage, engendrée par un organe de pilotage 8, 9 et adressée audit dispositif 37 par une liaison 13.

Cette consigne de pilotage en tangage, ainsi traitée et pondérée par le dispositif 37 et le multiplicateur 38, est adressée à un additionneur 39, dans lequel elle est additionnée à l'ordre de commande en tangage apparaissant à la sortie de l'additionneur 36.

L'ordre composite de commande en tangage apparaissant à la sortie de l'additionneur 39 est adressé aux actionneurs 16.i de la gouverne de profondeur 21 et du plan horizontal réglable 22 pour déplacement correspondant de ces derniers.

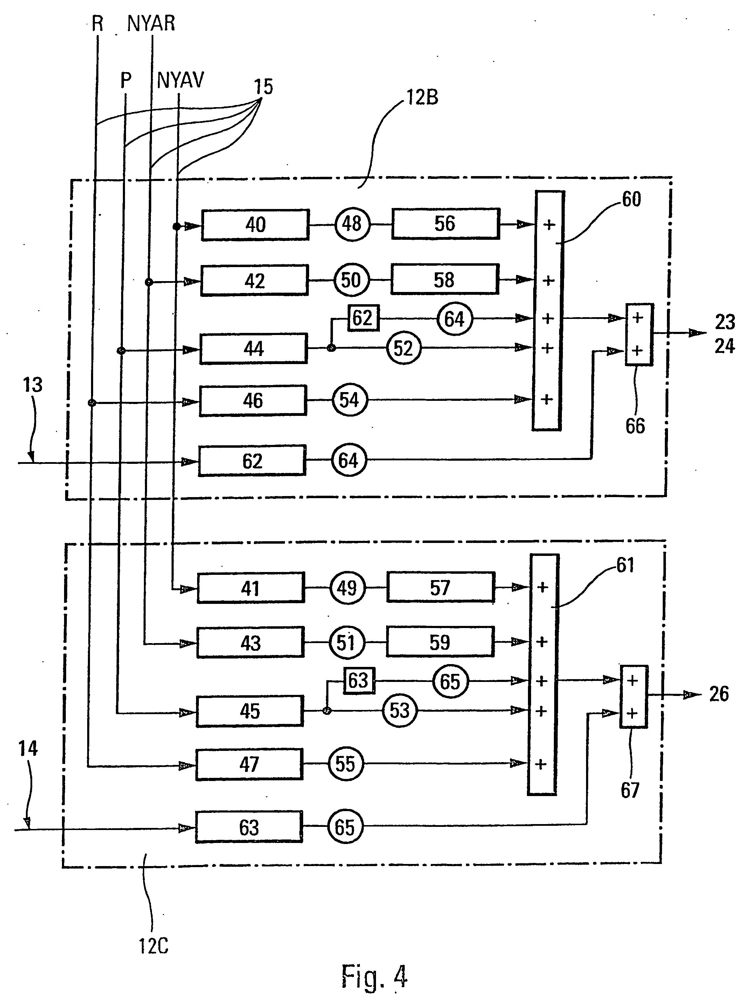

La figure 4 représente schématiquement les parties 12B et 12C du calculateur de commandes de vol 12, correspondant respectivement à la commande en roulis au moyen des ailerons 23 et des spoilers 24 et à la commande en lacet au moyen de la gouverne de direction 26. Ces deux parties 12B et 12C du calculateur 12 reçoivent, par les liaisons 15 correspondantes, les mesures d'accélération latérale NYAV et NYAR délivrées par les accéléromètres 5 et 6, ainsi que les vitesses de roulis P et de lacet R mesurées par le gyromètre 7.

Dans chacune desdites parties de calculateur 12B et 12C, chaque mesure NYAV, NYAR, P et R est filtrée par des moyens de filtrage à haute fréquence (supérieure à 10 Hz) 40, 41; 42, 43 ; 44, 45 ; 46, 47, respectivement, permettant aux commandes correspondantes d'être affranchies des problèmes de bruit et de repliement de spectre, sans influence désavantageuse pour les performances desdites commandes. De plus, lesdites mesures sont pondérées par des gains, grâce à des multiplicateurs de gain respectifs 48, 49 ; 50, 51 ; 52, 53 ; 54, 55. Des contrôleurs de phase respectifs 56, 57 et 58, 59 --analogues aux contrôleurs 34 et 35 de la partie 12A du calculateur 12-- reçoivent les mesures accélérométriques NYAV et NYAR pondérées pour contrôler activement les modes structuraux de fuselage 2. Les signaux sortant des contrôleurs 56 et 58 et des multiplicateurs de gain 52 et 54 sont transmis à des additionneurs 60. De même, les signaux sortant des contrôleurs 57 et 59 et des multiplicateurs de gain 53 et 55 sont transmis à un additionneur 61.

De plus, dans chaque partie de calculateur 12B ou 12C, la vitesse de roulis P filtrée, apparaissant aux sorties des moyens de filtrage 44 ou 45, respectivement, est intégrée par un intégrateur 62 ou 63, puis pondérée par un mutiplicateur de gain 64 ou 65. De telles intégrations permettent de créer une information d'angle de roulis, qui est adressée à l'additionneur 60 ou 61, respectif.

Ainsi, aux sorties des additionneurs 60 et 61, on obtient respectivement un ordre de commande en roulis et un ordre de commande en lacet qui sont, chacun, une fonction des quatre mesures NYAV, NYAR, P et R et de l'information d'angle de roulis résultant de l'intégration par l'intégrateur 62 ou 63, respectivement.

La partie de calculateur de vol 12B comporte de plus un dispositif de traitement 62 et un multiplicateur de gain 64 pour la consigne de pilotage en roulis, engendrée par un organe de pilotage 8, 9 et adressée audit dispositif 62 par une liaison 13. Cette consigne de pilotage en roulis, ainsi traitée et pondérée par le dispositif 62 et le multiplicateur de gain 64, est adressée à un additionneur 66, dans lequel elle est additionnée à l'ordre de commande en roulis apparaissant à la sortie de l'additionneur 60. L'ordre composite de commande en roulis apparaissant à la sortie de l'additionneur 66 est adressé aux actionneurs 16.i des ailerons 23 et des spoilers 24.

De même, la partie de calculateur 12C comporte de plus un dispositif de traitement 63 et un multiplicateur de gain 65 pour la consigne de pilotage en lacet, engendrée par un organe de pilotage 10, 11 et adressée audit dispositif 63 par une liaison 14. Cette consigne de pilotage en lacet, ainsi traitée et pondérée par le dispositif 63 et le multiplicateur de gain 65, est adressée à un additionneur 67, dans lequel elle est additionnée à l'ordre de commande en lacet apparaissant à la sortie de l'additionneur 61. L'ordre composite de commande en lacet apparaissant à la sortie de l'additionneur 67 est adressé aux actionneurs 16.i de la gouverne de direction 26.

## Revendications

1. Aéronef (1) à commandes de vol électriques, pourvu de gouvernes (21, 22, 23, 24, 26) aptes à être déplacées par des actionneurs (16.1 à 16.n) commandés électriquement, ledit aéronef comportant :
- des organes de pilotage (8, 9 ; 10, 11) et au moins un calculateur de commandes de vol (12), lesdits organes de pilotage étant actionnés par un pilote et engendrant des consignes électriques de pilotage, qui sont adressées audit calculateur de commandes de vol, ce dernier calculateur engendrant, à partir desdites consignes électriques de pilotage et de paramètres de pilotage, des ordres de commande en roulis, en tangage et en lacet, qui sont adressés auxdits actionneurs pour le déplacement desdites gouvernes correspondantes ;
- un système de référence inertielle comprenant des éléments (CI) utiles à la navigation et des éléments (5, 6, 7) utiles au pilotage, ces derniers éléments étant soit du type gyromètre (7), soit du type accéléromètre (5, 6) ; et
- un fuselage (2) susceptible de se déformer et de vibrer avec formation de ventres et de noeuds de vibration répartis le long de l'axe longitudinal (L-L) dudit aéronef,
**caractérisé en ce que** :
- ledit système de référence inertielle présente une structure éclatée, avec lesdits éléments (5, 6, 7) utiles au pilotage séparés desdits éléments (CI) utiles à la navigation ;
- lesdits éléments (5, 6, 7) utiles au pilotage sont répartis le long dudit fuselage (2) ;
- chaque élément (7) utile au pilotage, de type gyromètre, est disposé à un noeud de vibration (4) dudit fuselage (2) ;
- chaque élément (5, 6) utile au pilotage, de type accéléromètre, est disposé à un ventre de vibration (3AV, 3AR) dudit fuselage (2) ; et
- lesdits éléments (5, 6, 7) utiles au pilotage sont reliés audit calculateur de commandes de vol (12), afin que les signaux de mesure (NYAV, NZAV, NYAR, NZAR, P, Q, R) qu'ils délivrent soient utilisés comme paramètres de pilotage.

2. Aéronef (1) selon la revendication 1, dont le fuselage (2) se déforme et vibre de façon à comporter un ventre de vibration à chacune de ses extrémités (3AV, 3AR) et un noeud de vibration au voisinage de son centre de gravité (4),
**caractérisé en ce qu'**il comporte:
- au moins un accéléromètre avant (5) disposé à la partie avant (3AV) dudit fuselage (2) et délivrant une mesure d'accélération verticale (NZAV) et une mesure d'accélération latérale (NYAV) ;
- au moins un accéléromètre arrière (6) disposé à la partie arrière (3AR) dudit fuselage (2) et délivrant une mesure d'accélération verticale (NZAR) et une mesure d'accélération latérale (NYAR) ; et
- au moins un gyromètre (7) disposé au voisinage dudit centre de gravité (4) dudit aéronef et délivrant des mesures de la vitesse de roulis (P), de la vitesse de tangage (Q) et de la vitesse de lacet (R).

3. Aéronef (1) selon la revendication 2,
**caractérisé en ce que** lesdites mesures d'accélération verticale (NZAV et NZAR), respectivement engendrées par ledit accéléromètre avant (5) et par ledit accéléromètre arrière (6), et la mesure de la vitesse de tangage (Q), engendrée par ledit gyromètre (7), sont utilisées comme paramètres de pilotage pour l'élaboration desdits ordres de commande en tangage.

4. Aéronef (1) selon la revendication 2,
**caractérisé en ce que** lesdites mesures d'accélération latérale (NYAV et NYAR), respectivement engendrées par ledit accéléromètre avant (5) et par ledit accéléromètre arrière (6), et lesdites mesures de la vitesse de roulis (P) et de la vitesse de lacet (R), engendrées par ledit gyromètre (7), sont utilisées comme paramètres de pilotage pour l'élaboration desdits ordres de commande en roulis.

5. Aéronef (1) selon la revendication 2,
**caractérisé en ce que** lesdites mesures d'accélération latérale (NYAV et NYAR), respectivement engendrées par ledit accéléromètre avant (5) et par ledit accéléromètre arrière (6), et lesdites mesures de la vitesse de roulis (P) et de la vitesse de lacet (R), engendrées par le gyromètre (7), sont utilisées comme paramètres de pilotage pour l'élaboration desdits ordres de commande en lacet.

6. Aéronef (1) selon l'une des revendications 3, 4 ou 5,
**caractérisé en ce qu'**il comporte :
- des moyens de filtrage (28, 29, 30 - 40, 42, 44, 46 - 41, 43, 45, 47) desdites mesures d'accélération et de la ou des mesures de vitesse, pour en éliminer les bruits de mesure et éviter le repliement de spectre ;
- des multiplicateurs de gain (31, 32, 33 - 48, 50, 52, 54 - 49, 51, 53, 55) pour pondérer chacune desdites mesures d'accélération ou de vitesse filtrées ;
- des moyens de contrôle de phase (34, 35 - 56, 58 - 57, 59) pour lesdites mesures d'accélération filtrées et pondérées ; et
- des moyens d'addition (36, 39 - 60, 66 - 61, 67) pour additionner lesdites mesures d'accélération filtrées, pondérées et contrôlées en phase, ladite ou lesdites mesure(s) de vitesse filtrée(s) et pondérée(s) et la consigne électrique de pilotage correspondante, afin d'élaborer l'ordre de commande correspondant.

7. Aéronef (1) selon la revendication 6 et l'une quelconque des revendications 4 ou 5,
**caractérisé en ce qu'**il comporte de plus des moyens d'intégration (62, 63) de la vitesse de roulis (P), afin de créer une information d'angle de roulis, qui est adressée auxdits moyens d'addition (60, 66 - 61, 67) après pondération par un multiplicateur de gain (64-65).

## Patentansprüche

1. Fly-By-Wire gesteuertes Flugzeug mit Steuerrudern (21, 22, 23, 24, 26), die durch elektrisch gesteuerte Wirkelemente (16.1 bis 16.n) verstellt werden können, wobei das Flugzeug umfasst:
- Bedienungseinrichtungen (8, 9; 10, 11) und wenigstens einen Rechner (12) zur Flugsteuerung, wobei die Bedienungseinrichtungen durch einen Piloten betätigt werden und elektrische Bedienungsanweisungen erzeugen, die an den Rechner zur Flugsteuerung adressiert sind, wobei dieser Rechner ausgehend von den elektrischen Bedienungsanweisungen und Bedienungsparametem Steuerbefehle in Bezug auf ein Rollen, Nicken und Gieren erzeugt, die an die Wirkelemente zur Verstellung der korrespondierenden Steuerruder adressiert sind;
- ein träges Bezugssystem mit Elementen (CI) zur Navigation und Elementen (5, 6, 7) zur Richtungssteuerung nützlich sind, wobei letztere Elemente sowohl einen Gyrometer (7) als auch einen Beschleunigungsmesser (5, 6) aufweisen können; und
- einen Rumpf (2), der sich unter Bildung von Schwingungsbäuchen und -knoten entlang der Längsachse (L-L) des Flugzeugs verformen und in Schwingung versetzen lässt,
**dadurch gekennzeichnet, dass**:
- das träge Bezugssystem eine versprengte Struktur darstellt, in welcher die Elemente (5, 6, 7) zur Richtungssteuerung von den Elementen (CI) zur Navigation getrennt sind;
- die Elemente (5, 6, 7) zur Richtungssteuerung entlang des Rumpfes (2) verteilt sind;
- jedes Element (7) zur Richtungssteuerung vom Typ eines Gyrometers an einem Schwingungsknoten (4) des Rumpfes (2) angeordnet ist;
- jedes Element (5, 6) zur Richtungssteuerung vom Typ eines Beschleunigungsmessers an einem Schwingungsbauch (3AV, 3AR) des Rumpfes (2) angeordnet ist; und
- die Elemente (5, 6, 7) zur Richtungssteuerung mit dem Rechner (12) zur Flugsteuerung verbunden sind, damit die Messsignale (NYAV, NZAV, NYAR, NZAR, P, Q, R), die diese liefern, als Steuerparameter genutzt werden.

2. Flugzeug (1) nach Anspruch 1, dessen Rumpf (2) sich in der Weise verformt und in Schwingung versetzen lässt, dass ein Schwingungsbauch an jedem seiner Enden (3AV, 3AR) und ein Schwingungsknoten in der Nähe seines Schwerpunktes (4) vorhanden ist,
**dadurch gekennzeichnet, dass** dieses umfasst:
- wenigstens einen vorderen Beschleunigungsmesser (5), der am vorderen Teil (3AV) des Rumpfes (2) angeordnet ist und ein vertikales Beschleunigungsmaß (NZAV) und ein seitliches Beschleunigungsmaß (NYAV) liefert;
- wenigstens einen hinteren Beschleunigungsmesser (6), der am hinteren Teil (3AR) des Rumpfes (2) angeordnet ist und ein vertikales Beschleunigungsmaß (NZAR) und ein seitliches Beschleunigungsmaß (NYAR) liefert; und
- wenigstens einen Gyrometer (7), der in der Nähe des Schwerpunktes (4) des Flugzeugs angeordnet ist und Messgrößen der Rollgeschwindigkeit (P), der Nickgeschwindigkeit (Q) und der Giergeschwindigkeit (R) liefert.

3. Flugzeug (1) nach Anspruch 2,
**dadurch gekennzeichnet, dass** die vertikalen Beschleunigungsmaße (NZAV und NZAR), die jeweils durch den vorderen Beschleunigungsmesser (5) und durch den hinteren Beschleunigungsmesser (6) erzeugt werden, und das Maß der Nickgeschwindigkeit (Q), das durch den Gyrometer (7) erzeugt wird, als Parameter für die Erstellung der Befehle zur Nicksteuerung verwendet werden.

4. Flugzeug (1) nach Anspruch 2,
**dadurch gekennzeichnet, dass** die seitlichen Beschleunigungsmaße (NYAV und NYAR), die jeweils durch den vorderen Beschleunigungsmesser (5) und durch den hinteren Beschleunigungsmesser (6) erzeugt werden, und die Maße der Rollgeschwindigkeit (P) und der Giergeschwindigkeit (R), die durch den Gyrometer (7) erzeugt werden, als Steuerparameter zur Erstellung der Befehle zur Rollsteuerung verwendet werden.

5. Flugzeug (1) nach Anspruch 2,
**dadurch gekennzeichnet, dass** die seitlichen Beschleunigungsmaße (NYAV und NYAR), die jeweils durch den vorderen Beschleunigungsmesser (5) und durch den hinteren Beschleunigungsmesser (6) erzeugt werden, und die Maße der Rollgeschwindigkeit (P) und der Giergeschwindigkeit (R), die durch den Gyrometer (7) erzeugt werden, als Steuerparameter für die Erstellung der Befehle zur Giersteuerung verwendet werden.

6. Flugzeug (1) nach einem der Ansprüche 3, 4 oder 5,
**dadurch gekennzeichnet, dass** dieses umfasst:
- Filtereinrichtungen (28, 29, 30 bis 40, 42, 44, 46 bis 41, 43, 45, 47) für die Beschleunigungsmaße und die Geschwindigkeitsmaße, um die Messgeräusche daraus zu eliminieren und das Verbiegen des Spektrums zu vermeiden;
- Verstärkungsmultiplikatoren (31, 32, 33 bis 48, 50, 52, 54 bis 49, 51, 53, 55), um jedes der gefilterten Beschleunigungs- oder Geschwindigkeitsmaße zur gewichten;
- Phasen-Regulierungsmittel (34, 35 bis 56, 58 bis 57, 59) für die gefilterten und gewichteten Beschleunigungsmaße; und
- Additionsmittel (36, 39 bis 60, 66 bis 61, 67), um die gefilterten, gewichteten und phasenregulierten Beschleunigungsmaße, die ein oder mehreren gefilterten und gewichteten Geschwindigkeitsmaße und die korrespondierende elektrische Bedienungsanweisung zu addieren, um den entsprechenden Steuerbefehl zu erstellen.

7. Flugzeug (1) nach Anspruch 6 und einem der Ansprüche 4 oder 5,
**dadurch gekennzeichnet, dass** dieses femer Integrationsmittel (62, 63) der Rollgeschwindigkeit (P) umfasst, um so eine Information über den Rollwinkel zu erzeugen, die nach der Gewichtung durch einen Verstärkungsmultiplikator (64 bis 65) an die Additionsmittel (60, 66 bis 61, 67) adressiert wird.

## Claims

1. An aircraft (1) with electric flight controls, provided with control surfaces (21, 22, 23, 24, 26) able to be moved by electrically operated actuators (16.1 to 16.n), said aircraft comprising:
- controls (8, 9; 10, 11) and at least one flight control computer (12), said controls being actuated by a pilot and generating electric flight control datums which are sent to said flight control computer, the latter computer generating, on the basis of said electric flight control datums and flight control parameters, commands in roll, pitch and yaw, which are sent to said actuators to move said corresponding control surfaces;
- an inertial reference system comprising elements (CI) useful in navigation and elements (5, 6, 7) useful in flight control, the latter elements being either of the gyrometer type (7) or the accelerometer type (5, 6); and
- a fuselage (2) able to deform and vibrate with the formation of vibration nodes and antinodes distributed along the longitudinal axis (L-L) of said aircraft,
wherein:
- said inertial reference system has an exploded structure with said elements (5, 6, 7) useful in flight control separated from said elements (CI) useful in navigation;
- said elements (5, 6, 7) useful in flight control are distributed along said fuselage (2);
- each element (7) useful in flight control, of the gyrometer type, is arranged at a vibration node (4) of said fuselage (2);
- each element (5, 6) useful in flight control, of the accelerometer type, is arranged at a vibration antinode (3AV, 3AR) of said fuselage (2); and
- said elements (5, 6, 7) useful in flight control are connected to said flight control computer (12) so that the measurement signals (NYAV, NZAV, NYAR, NZAR, P, Q, R) they deliver are used as flight control parameters.

2. The aircraft (1) as claimed in claim 1, the fuselage (2) of which deforms and vibrates in such a way as to have a vibration antinode at each of its ends (3AV, 3AR), and a vibration node near its center of gravity (4),
and which comprises:
- at least one front accelerometer (5) arranged at the front part (3AV) of said fuselage (2) and delivering a vertical acceleration measurement (NZAV) and a lateral acceleration measurement (NYAV);
- at least one rear accelerometer (6) arranged at the rear part (3AR) of said fuselage (2) and delivering a vertical acceleration measurement (NZAR) and a lateral acceleration measurement (NYAR) ; and
- at least one gyrometer (7) arranged near said center of gravity (4) of said aircraft and delivering roll rate (P), pitch rate (Q) and yaw rate (R) measurements.

3. The aircraft (1) as claimed in claim 2, wherein said vertical acceleration measurements (NZAV and NZAR) generated by said front accelerometer (5) and by said rear accelerometer (6) respectively and the pitch rate measurement (Q) generated by said gyrometer (7), are used as flight control parameters to formulate said pitch commands.

4. The aircraft (1) as claimed in claim 2, wherein said lateral acceleration measurements (NYAV and NYAR) generated by said front accelerometer (5) and by said rear accelerometer (6) respectively, and said roll rate (P) and yaw rate (R) measurements generated by said gyrometer (7), are used as flight control parameters to formulate said roll commands.

5. The aircraft (1) as claimed in claim 2, wherein said lateral acceleration measurements (NYAV and NYAR) generated by said front accelerometer (5) and by said rear accelerometer (6) respectively, and said roll rate (P) and yaw rate (R) measurements generated by the gyrometer (7), are used as flight control parameters for formulating said yaw commands.

6. The aircraft (1) as claimed in anyone of claims 3, 4 or 5, and which comprises:
- means (28, 29, 30 - 40, 42, 44, 46 - 41, 43, 45, 47) of filtering said acceleration measurements and the rate measurement or measurements to eliminate measurement noise therefrom and avoid spectrum folding;
- gain multipliers (31, 32, 33 - 48, 50, 52, 54 - 49, 51, 53, 55) for weighting each of said filtered acceleration or rate measurements;
- phase control means (34, 35 - 56, 58 - 57, 59) for said filtered and weighted acceleration measurements; and
- summing means (36, 39 - 60, 66 - 61, 67) for summing said filtered, weighted and phase-controlled acceleration measurements, said filtered and weighted rate measurement or measurements and the corresponding electric flight control datum to formulate the corresponding command.

7. The aircraft (1) as claimed in claim 6 and in anyone of claims 4 or 5, which additionally comprises means (62, 63) of integrating the roll rate (P) so as to create information about the roll angle, which information is sent to said summing means (60, 66 - 61, 67) after it has been weighted by a gain multiplier (64-65).
